# EUROPEAN PATENT SPECIFICATION

(11) **EP 2 537 417 B1**
(45) Date of publication and mention of the grant of the patent: **27.05.2015**
(21) Application number: 11171246.9
(22) Date of filing: 23.06.2011
(51) Int. Cl.: A01N 3/02, A01N 59/16, B01J 20/04, B01J 20/06, B01J 20/18, B01J 20/26, B01J 20/28, B01J 20/30, C02F 1/50, C02F 1/28, C02F 1/42

(54) **Antibiotic aid and kit-in-parts comprising ion-exchange material loaded with antibiotic ions**
Antibiotikisches Mittel und ein mehrteileges Kit enthaltend ein mit Antibiotikaionen beladenes Ionenaustauschmaterial
Aide antibiotique et kit multi-composant comportant un matériau d'échange d'ions chargé avec des ions antibiotiques

(43) Date of publication of application: 26.12.2012
(73) Proprietor: Probalco BVBA, 8510 Bellegum (BE)
(72) Inventor: Speleers, Pol, 8510 Bellegem (BE); Redjal, Karim, 8510 Bellegem (BE)
(74) Representative: BiiP cvba

(56) References cited:
- EP-A2- 0 270 129
- US-A- 3 382 039
- US-A- 3 935 295
- US-A- 4 849 223
- US-A- 5 547 586
- LV L ET AL: "Uptake of chloride ion from aqueous solution by calcined layered double hydroxides: Equilibrium and kinetic studies", WATER RESEARCH, ELSEVIER, AMSTERDAM, NL, vol. 40, no. 4, 1 February 2006 (2006-02-01), pages 735-743, XP027902307, ISSN: 0043-1354 [retrieved on 2006-02-01]

## Description

### FIELD OF THE INVENTION

The present invention concerns an antibiotic aid, in particular an antibiotic aid for the preservation of cut flowers, said aid comprising an ion-exchange material loaded with antibiotic metal cations and an anion sink, the anion sink comprising: a) a container wherein said ion-exchange material is provided, the container having pores impermeable to precipitated salts or salts crystals of said antibiotic metal cations and permeable to water and to the antibiotic metal cations; or b) an anion ad(b)sorbent. The present invention also concerns a kit-in-parts comprising said antibiotic aid.

### BACKGROUND OF THE INVENTION

It is generally known that cut flowers are vulnerable to microbial infection resulting in an early withering of the flowers. In order to prevent early withering, a broad variety of aids and devices have been developed that allow extending the lifetime of the cut flowers.

It has been acknowledged that antibiotic aids based on the release of metal ions are an effective manner of preventing early withering of cut flowers. Both EP 0,270,129 and EP 1,927,286 disclose antibiotic aids that release metal ions and preferably silver ions when provided in water for the preservation of cut flowers.

EP 0,270,129 describes ion-exchange materials loaded with metal ions to be used as aid for the preservation of cut flowers.

Although silver ions are amongst the most preferred antibiotic agents, they have the major inconvenience that in presence of chloride ions, silver chloride (AgCl) is formed that is highly insoluble and precipitates in the form of a milky mist, resulting in troubled water undesired and aesthetically incompatible with the flourishing flowers in the vase.

Apart from the aesthetical inconvenience, the precipitation of the silver ions also results in a reduced antibiotic capacity of the aid as the precipitated silver ions are no longer available for disturbing/inhibiting bacterial or microbial growth.

Hence it will be appreciated that there remains a need for improving anti-biotic aids to overcome one or more of the above inconveniences.

The systems for removing chloride anion from water are known in the art. US 5547586 discloses container made of selectively permeable membrane, said container containing therein: silver carbonate, cation exchange resin and preferably anion exchange resin. US 3382039 discloses the use of silver zeolite for removing chloride anions from water. Liang Lu et. al (Water Research 40 (2006) 735-743) describes use of calcinated layered double hydroxides (eg. Mg-Al-Oxide) for removing of chloride ion from aqueous solution.

### DESCRIPTION OF THE INVENTION

The present invention concerns an antibiotic aid, said aid comprising an ion-exchange material loaded with antibiotic metal cations and an anion sink, the anion sink comprising: a) a container wherein said ion-exchange material is provided, the container having pores impermeable to precipitated salts or salts crystals of said antibiotic metal cations and permeable to water and to the antibiotic metal cations; or b) an anion ad(b)sorbent.

The present invention also concerns a kit-in-parts comprising said antibiotic aid

### DESCRIPTION OF PREFERRED EMBODIMENTS

According to the present invention, the antibiotic aid comprises an ion-exchange material - loaded with antibiotic ions - and an anion sink.

### Ion-exchange material

Ion-exchange materials applicable for the present invention are those that allow exchange of antibiotic metal cations, loaded on the ion exchange material, with cations present in tap water.

As such, either natural zeolites or synthetic zeolites may be used as ion-exchange material. Zeolite is in general aluminosilicate having a three dimensional skeletal structure and represented by the general formula: XM2/nO-Al2O3-YSiO2-ZH2O. In the general formula, M represents an ion-exchangeable ion and in general a monovalent or divalent metal ion, n represents atomic valence of the (metal) ion, X and Y represent coëficients of metal oxide and silica respectively, and Z represents the number of water of crystallization. Examples of such zeolites include A-type zeolites, X-type zeolites, Y-type zeolites, T-type zeolites, high-silica zeolites, sodalite, mordenite, analcite, clinoptilolite, chabazite and erionite.

The ion exchange capacities of these exemplified zeolite are as follows: A-type zeolite = 7 mmol/g (meq/g); X-type zeolite = 6.4 mmol/g (meq/g); Y-type zeolite = 5mmol/g (meq/g); T-type zeolite = 3.4 mmol/g (meq/g); sodalite = 11.5 mmol/g (meq/g); mordenite = 2.6 mmol/g (meq/ g); analcite = 5 mmol/g (meq/g); clinoptilolite = 2.6 mmol/g (meq/g); chabazite = 5 mmol/g (meq/g); and erionite = 3.8 mmol/g (meq/g), such that all the zeolites listed above have ion-exchange capacity sufficient to undergo ion-exchange with ammonium and antibiotic metal ions.

In the zeolite of the present invention, ion-exchangeable ions present in zeolite, such as sodium ions, calcium ions, potassium ions and iron ions are completely or partially replaced antibiotic metal ions and preferably with ammonium and antibiotic metal ions.

Alternatively, the ion exchange material may be part of an antibiotic resin composition. The resin composition comprises the aforementioned zeolite and resin. Examples of the resin include a thermoplastic or thermosetting resin such as polyethylene, polypropylene, polyvinyl chloride, ABS resin, nylons, polyesters, polyvinylidene chloride, polyamides, polystyrene, polyacetals, polyvinyl alcohol, polycarbonate, acrylic resins, fluoroplastics, polyurethane elastomer, phenolic resins, urea resins, melamine resins, unsaturated polyester resins, epoxy resins, urethane resins, rayon, cuprammonium rayon, acetates, triacetates, vinylidene, natural or synthetic rubbers such as a rubber block polymer (Septon by Kuraray) or silicone.

According to a further alternative biodegradable resins such as for example polylactic acid based resins.

The resin composition is prepared by incorporating the zeolite into the resin by means of kneading it with the zeolite or coating the zeolite on the surface of such a resin. In order to provide proper antibacterial, antifungus and antialgal properties to the resin composition, the content of the zeolite suitably ranges from 0.05 to 80 wt%, preferably 0.1 to 80 wt% and most preferably 65 to 70 wt%. Another example of resin is an acryl (e.g Setalux 1193 by Nuplex) /PU (e.g. Desmodur N75 by BASF) mixture, preferably in a Acryl/PU weight percent ratio ranging between 50/50 to 90/10, most preferably in a ratio of 75/25. This resin can be mixed with zeolite in a zeolite/resin ratio ranging between 90/10 to 50/50, preferably 70/30 and kneaded to obtain stable anti-biotic beads.

Further examples of resins include an epoxy (DER332 by Dow Chemicals) and diethylenetriamine mixture in a epoxy/diethylenetriamine w% ratio ranging between 90/10 and 80/20; a mixture of acryl (e.g. Setal 84xx70 by Nuplex) and melamine (e.g. Setamine US132 by Nuplex) in a W% ratio ranging between 50/50 to 90/10, most preferably in a ratio of 75/25.

### Antibiotic ions

Examples of the antibiotic metal ions include ions of silver, copper zinc, mercury, tin, lead, bismuth, cadmium, chromium and thallium. Preferably the antibiotic metal ions are silver and copper or zinc ions.

In general the antibiotic metal ions are preferably contained in the zeolite in the range of from 0.1 to 15 % of the zeolite. Although ammonium ion can be contained in the zeolite in the range of 20 % or less of the zeolite, it is desirable to limit the content of ammonium ions in the zeolite to a range of from 0.5 to 15%, prerferably 1.5 to 5%. In this connection, the term "%" herein means "% by weight" on the basis of the weight dried at 110 °C.

Loading of the zeolite with antibiotic metals may be obtained by bringing a zeolite into contact with a previously prepared aqueous mixed solution containing ammonium ions and antibiotic metal ions such as silver, copper and zinc ions to cause ion-exchange between ion-exchangeable ions in the zeolite and the aforesaid ions. The contact between these ions may be carried out according to a batch technique or a continuous technique (such as a column method) at a temperature of from 10 to 70 °C, preferably from 40 to 60 °C, for 3 to 24 hours, preferably 10 to 24 hours. The pH value of the aqueous mixed solution is preferably adjusted to 3 to 10, more preferably 5 to 7. Each of the ions are in general used in the form of a salt to prepare the aqueous mixed solution. For instance, there may be mentioned such an ammonium ion source as ammonium nitrate, ammonium sulfate and ammonium acetate; such a silver ion source as silver nitrate, silver sulfate, silver perchlorate, silver acetate, diamine silver nitrate and diamine silver nitrate; such a copper ion source as copper(II) nitrate, copper sulfate, copper perchlorate, copper acetate, tetracyan copper potassium; such a zinc ion source as zinc(II) nitrate, zinc sulfate, zinc perchlroate, zinc acetate and zinc thiocyanate; such a mercury ion source as mercury perchlorate, mercury nitrate and mercury acetate; such a tin ion source as tin sulfate; such a lead ion source as lead sulfate and lead nitrate; such a bismuth ion source as bismuth chloride and bismuth iodide; such a cadmium ion source as cadmium perchlorate, cadmium sulfate, cadmium nitrate and cadmium acetate; such a chromium ion source as chromium perchlorate, chromium sulfate, chromium ammonium sulfate and chromium acetate; and such a thallium ion source as thallium ion source as thallium perchlorate, thallium sulfate, thallium nitrate and thallium acetate.

The content of the metal ions and ammonium ions in the zeolite can be controlled by adjusting the concentration of each ion species (or salt) in the aforesaid aqueous mixed solution. For example, if the zeolite is to be loaded with ammonium and silver ions, the antibiotic zeolite having an ammonium ion content of 0.5 to 5% and a silver ion content of 0.1 to 5% can properly be obtained by bringing a zeolite into contact with an aqueous mixed solution having an ammonium ion concentration of 0.2 mol/l to 2.5 mol/l and a silver ion concentration of 0.002 mol/l to 0.15 mol/l Moreover, if the antibiotic zeolite further comprises copper ions and zinc ions, the antibiotic zeolite having a copper ion content of 0.1 to 8% and a zinc ion content of 0.1 to 8% can properly be obtained by employing an aqueous mixed solution containing 0.1 mol/l to 0.85 mol/l of copper ions and 0.15 mol/l to 1.2 mol/l of zinc ions in addition to the aforementioned amounts of ammonium ions and silver ions.

Alternatively, loading of the zeolite may also be obtained by using separate aqueous solutions each containing single different ion species (or salt) and bringing a zeolite into contact with each solution one by one to cause ion exchange there between.

The concentration of each ion species in a specific solution can be determined in accordance with the concentrations of these ion species in the aforementioned aqueous mixed solution. After completion of the ion exchange, the zeolite thus treated is washed with water sufficiently followed by drying. The zeolite is preferably dried at a temperature of 105 to 115 °C under normal pressure or at a temperature of 70 to 90 °C under a reduced pressure (133 to 4000 Pa = 1 to 30 torr)

As an alternative to zeolite, clay minerals or synthetic ion-exchange materials ,such as sulfonated coal, styrene-base, phenolic types and acrylic based exchange materials ,can be applied.

### Anion sink

In a first embodiment of the present invention, the anion sink comprises a container, preferably a porous structure defining an inner space and comprising pores, the pores permeable to water and metal ions but impermeable to salts of the antibiotic metal ions and especially impermeable to AgCl crystals which have a typical diameter of at least 0,5 micron. The structure can either be a flexible membrane or a more rigid structure or a combination of both.

In this first embodiment the ion exchange material loaded with antibiotic metals is provided in said inner space.

According to this embodiment the anion sink functions such that when antibiotic metals in the ion exchange material are released in water in a vase and precipitate as salts with anions present in that water, the precipitated salts remain captured in said inner space of the anion sink, without forming a milky or whitish precipitate in the surrounding water in a vase. As such anions likely to precipitate with any of the antibiotic metals are caught inside the anion sink. As the concentration of free anions of precipitating salts decreases, the solubility of the counter ion, i.e. the antibiotic metal increases and said metals will permeate through the pores of the container and have an antibiotic effect in the water of the vase, while not or only in a very limited amount increasing turbidity of the water. Hence, the water in the vase will remain clear and aesthetically more compatible with flourishing flowers in the vase than without the anion sink.

According to a second embodiment, the anion sink comprises an anion ad(b)sorbent allowing binding anions present in tap water that are likely to precipitate with antibiotic ions.

As an example of solid ad(b)sorbent is an ad(b)sorbent obtained by adding a clay mineral as an inert binder to zinc oxide and calcium oxide as an ad(b)sorbing ingredient. Such ad(b)sorbent can be prepared as follows: 1 kg of hydrated lime and 2 kg of zinc oxides are dry mixed with 0,08 kg of powdered clay. The zinc oxides is derived by the thermal decomposition of zinc carbonate which in turn is precipitated by the controlled thermal decomposition of a solution of zinc ammine carbonate Zn(NH₃)₄ CO₃ through the release of NH₃. The resulting zinc oxides obtained by calcining the zinc carbonate at 370 °C had a surface area in the range of from 40 to 70 m²/g. About 0,15 kg of water is slowly added to the mixture with constant wet mixing at such a rate as to keep the temperature rise of the wet mix below 10°C. When the wet mixed materials are of extrudable consistency, the mix can be extruded into pellets and subsequently further dried at 370 °C.

Such ad(b)sorbent is suited to effectively ad(b)sorb chloride ions out of the tap water and hence prevent precipitation of AgCl in the water. Moreover, no Ag⁺ ions are involved in the ad(b)sorption of the chloride ions, thereby increasing the antibiotic capacity of the ion-exchange material loaded with Ag⁺.

Other suitable anion ad(b)sorbent comprise zinc oxide and/or calcium oxide and/or activated alumina carrying an alkaline metal thereon and/or polymer based anion-exchangers.

It is noted that either embodiment of the anion sink can be combined with different types of ion-exchange materials.

The capacity of the anion ad(b)sorbent and eventually of the ion exchange material loaded with antibiotic metal ions will depend on the hardness of tap water used for filling a vase. Therefore the present invention also concerns a kit-in-parts comprising (a) an ion exchange material loaded with antibiotic ions as described above and (b) an anion sink as previously described.

The kit-in-parts further preferably comprises an aid allowing to measure the hardness of water such as described in for example US 4,904,605. Additionally the kit may comprise information allowing to calculate the amount of loaded ion exchange material and/or anion sink needed to be added to a given quantity of water in function of the measured water hardness.

## Claims

1. An antibiotic aid comprising an ion-exchange material loaded with antibiotic metal cations, **characterized in that** said aid further comprises an anion sink, the anion sink comprising:
- a container wherein said ion-exchange material is provided, the container having pores impermeable to precipitated salts or salts crystals of said antibiotic metal cations and permeable to water and to the antibiotic metal cations; or
- an anion ad(b)sorbent.

2. The antibiotic aid according to claim 1, wherein the container comprises a porous structure providing said pores.

3. The antibiotic aid according to claim 2, wherein said pores are impermeable to AgCl crystals.

4. The antibiotic aid according to any of claims 1-3, wherein the ion-exchange material comprises one or more materials of the group consisting of: A-type zeolite; X-type zeolite; Y-type zeolite; natural mordenite; natural clinoptilite; chabazite; erionite; T-type zeolite; high-silica zeolite; sadalite and analcite.

5. The antibiotic aid according to any of claims 1-4, wherein the metal of said antibiotic metal cations is selected from the group of: silver; copper; zinc; mercury; tin; lead; bismuth; cadmium; chromium; and thallium or mixtures thereof.

6. The antibiotic aid according to claim 1, wherein the anion ad(b)sorbent comprises zinc oxide and/or calcium oxide and/or activated alumina carrying an alkaline metal thereon and/or a polymer based anion-exchanger.

7. The antibiotic aid according to claim 5, wherein the ion-exchange material is loaded with 2 to 6 mmol (meq) Ag-ions per gram of zeolite.

8. A kit-in-parts comprising the antibiotic aid as defined in claim 1.

9. The kit-in-parts according to claim 8, further comprising an aid allowing to measure the hardness of water.

10. The kit-in-parts according to claim 8 or 9, further comprising information allowing to calculate the amount of loaded ion exchange material and/or anion sink needed to be added to a given quantity of water in function of the water hardness.

## Patentansprüche

1. Antibiotisches Mittel, das ein Ionenaustauschmaterial umfasst, das mit antibiotischen Metallkationen beladen ist, **dadurch gekennzeichnet, dass** das besagte Mittel darüber hinaus eine Anionensenke umfasst, wobei die Anionensenke folgendes umfasst:
- einen Behälter, in dem das besagte Ionenaustauschmaterial bereitgestellt wird, wobei der Behälter Poren umfasst, die für ausgefällte Salze oder Salzkristalle der besagten antibiotischen Metallkationen undurchlässig sind, und die für Wasser und für die antibiotischen Metallkationen durchlässig sind; oder
- ein Anionen-Ad(b)sorptionsmittel

2. Antibiotisches Mittel nach Anspruch 1, wobei der Behälter eine poröse Struktur umfasst, die die besagten Poren bereitstellt.

3. Antibiotisches Mittel nach Anspruch 2, wobei die besagten Poren für AgCl Kristalle undurchlässig sind.

4. Antibiotisches Mittel nach einem der Ansprüche 1 bis 3, wobei das Ionenaustauschmaterial ein oder mehr Materialien aus der Gruppe folgenden Inhalts umfasst: Zeolith A, Zeolith X, Zeolith Y; natürlicher Mordenit, Clinoptilit natürlichen Ursprungs, Chabasit, Erionit, Zeolith T, silicareicher Zeolith; Sodalith und Analcit.

5. Antibiotisches Mittel nach einem der Ansprüche 1 bis 4, wobei das Metall der besagten antibiotischen Metallkationen aus der folgenden Gruppe ausgewählt wird: Silber, Kupfer, Zink, Quecksilber, Zinn, Blei, Wismut, Kadmium, Chrom, und Thallium oder Mischungen davon.

6. Antibiotisches Mittel nach Anspruch 1, wobei das Anionen-Ad(b)sorptionsmittel Zinkoxyd und/ oder Kalziumoxyd und/ oder aktiviertes Aluminium mit darauf einem Alkalimetall und/ oder einen polymerbasierten Anionentauscher umfasst.

7. Antibiotisches Mittel nach Anspruch 5, wobei das Ionenaustauschmaterial mit 2 bis 6 mmol (meq) Ag-Ionen pro Gramm Zeolith beladen ist.

8. Mehrteiliges Kit, antibiotische Mittel nach Anspruch 1 umfassend.

9. Mehrteiliges Kit nach Anspruch 8, das darüber hinaus ein Mittel umfasst, anhand dessen die Wasserhärte gemessen werden kann.

10. Mehrteiliges Kit nach Anspruch 8 oder 9, das darüber hinaus eine Information umfasst, die es ermöglicht, die Menge des geladenen Ionenaustauschmaterials und/ oder der Anionensenke zu berechnen, die je nach Wasserhärte zu einer gegebenen Menge an Wasser hinzuzufügen ist.

## Revendications

1. Aide antibiotique comprenant un matériau échangeur d'ions chargé avec de cations métalliques antibiotiques, **caractérisé en ce que** ledit aide comprend en outre un piège à anions, le piège à anions comprenant :
- un récipient dans lequel ledit matériau échangeur d'ions se trouve, le récipient ayant des pores imperméables aux sels ou cristaux de sels précipités desdits cations métalliques antibiotiques et perméables à l'eau et aux cations métalliques antibiotiques ; ou
- un ab (d) sorbant d'anions.

2. Aide antibiotique selon la revendication 1, dans lequel le récipient comprend une structure poreuse fournissant lesdits pores.

3. Aide antibiotique selon la revendication 2, dans lequel lesdits pores sont imperméables aux cristaux d'AgCl.

4. Aide antibiotique selon l'une quelconque des revendications 1 à 3, dans lequel le matériau échangeur d'ions comprend un ou plusieurs matériaux du groupe constitué par : une zéolithe de type A ; une zéolithe de type X ; une zéolithe de type Y ; une mordénite naturelle ; une clinoptilite naturelle ; la chabazite ; l'érionite ; une zéolithe de type T ; une zéolithe à teneur élevée en silice ; la sadalite et l'analcite.

5. Aide antibiotique selon l'une quelconque des revendications 1 à 4, dans lequel le métal desdits cations métalliques antibiotiques est choisi dans le groupe comprenant : l'argent ; le cuivre ; le zinc ; le mercure ; l'étain ; le plomb ; le bismuth ; le cadmium ; le chrome ; et le thallium ou leurs mélanges.

6. Aide antibiotique selon la revendication 1, dans lequel l'ab(d)sorbant d'anions comprend de l'oxyde de zinc et/ou de l'oxyde de calcium et/ou de l'alumine activée portant un métal alcalin et/ou un échangeur polymère d'anions.

7. Aide antibiotique selon la revendication 5, dans lequel le matériau échangeur d'ions est chargé avec 2 mmol (méq) à 6 mmol (méq) d'ions d'Ag par gramme de zéolithe.

8. Kit en plusieurs parties, comprenant l'aide antibiotique selon la revendication 1.

9. Kit en plusieurs parties selon la revendication 8, comprenant en outre un aide permettant de mesurer la dureté de l'eau.

10. Kit en plusieurs parties selon la revendication 8 ou 9, comprenant en outre des informations permettant de calculer la quantité de matériau échangeur d'ions chargé et/ou de piège à anions qui doit être ajoutée à une quantité donnée d'eau en fonction de la dureté de l'eau.
